# EUROPEAN PATENT SPECIFICATION

(11) **EP 2 857 972 B1**
(45) Date of publication and mention of the grant of the patent: **06.12.2017**
(21) Application number: 13186986.9
(22) Date of filing: 01.10.2013
(51) Int. Cl.: G06F 11/22

(54) **Keypad and method for operating the same**
Tastatur und Betriebsverfahren dafür
Clavier et son procédé de fonctionnement

(43) Date of publication of application: 08.04.2015
(73) Proprietor: Televic Rail NV, 8870 Izegem (BE)
(72) Inventor: Vercoutter, Bart, 8501 Bissegem (BE); Baert, Bram, 8830 Hooglede (BE); Eeckhout, Carl, 8870 Izegem (BE)
(74) Representative: Van Bladel, Marc

(56) References cited:
- US-A1- 2005 057 515
- US-A1- 2008 278 354

## Description

### Field of the invention

The present invention is generally related to the field of push buttons and keyboards comprising such push buttons for activating or deactivating a certain function. The invention also relates to methods for self-testing of such push buttons.

### Background of the invention

A variety of applications require verification of the proper functioning of push buttons and keypads or keyboards comprising a plurality of such push buttons, manipulated by humans, devices, animals, etc... Typically this is done by manually verifying the installed buttons of interest. This is often a time-consuming task, not providing in guaranteed coverage. Given the required effort, testing is mostly limited to a minimum, hence leaving the possibility for dormant failures.

Push buttons provided on the keypad are used to trigger a system adapted for performing one or more functions associated to those push buttons. Examples include playing a jingle to start an announcement to be made in a transportation vehicle or showing a message on a display. Sensing the trigger signal can activate or deactivate a function within the system. These functions may be safety critical. Therefore a high reliability of the push button is required. To ensure correct functioning of the push button, a regular testing, possibly even continuously, is necessary without impairing the possibility of operation of the push button.

Conventional push buttons often are implemented as a travelling element transducing a mechanical force applied to the button into a motion bringing an electrical, pneumatic, hydraulic, ... switching element in an alternate bi-stable state. In order to test the switching behaviour, an external force is required. The reliability of the switching function highly depends on the mechanical reliability of the switching element, since this is considered to be a single point of failure causing reliability limitations in fault tree analysis exercises. The only way to resolve this issue is to provide a second mechanical structure causing button dimensions to increase in size, cost and complexity.

Another drawback of current push button technology is that the push buttons are often hard to be found by blind people or visually disabled people. By adding an audible signal and tactile feeling, a push button could be found more easily.

Various test systems for push buttons have been described in the art. Application KR20100077248 discloses a test system for a button switch of a sound generator for a visually handicapped person. It enables a convenient test through one-time input setup by providing a drive unit holding a button switch whereby an end of an operating rod repeats press and release of a push button. A counter detects a voltage while the push button is pressed and counts the times of detected voltage. A controller compares the accumulated count number with a set count number and stops the operation of a hydraulic cylinder in case of matching.

GB 2442246 presents a light controlled pedestrian crossing with tactile indicator. A tactile signal module is provided comprising a DC electric motor that drives a rotary tactile indicator.

Patent EP0871185 discloses a push button providing a tactile and audible sign. Also US 4851836 relates to an audio-tactile pedestrian push button signalling system.

In many applications push buttons rather appear in keypads or keyboards comprising a plurality of push buttons. A very well-known example is a telephone keypad, as described e.g. in US2001/003539.

Application US2005/057515 relates to a computer keyboard with quantitatively force-sensing keys. It aims at determining how hard a key has been pressed, which requires an amount of additional processing. The force exerted upon a pressed key of the keyboard is transferred to the force sensors via a keyboard subassembly by means of a pair of ribs. The output of the force sensors can be used in an algorithm that calculates the location of the centre of the downward force on the keyboard. That location can next be mapped via a lookup table to the appropriate key.

Hence, there is a need for a solution where the problems encountered in the prior art solutions are overcome.

### Summary of the invention

It is an object of embodiments of the present invention to provide for a keypad capable of detecting an error in its operation. It is a further object to provide for a keypad allowing fault-tolerant detection of the activated button. Another object is to provide a keypad that can perform autonomous testing.

The above objective is accomplished by the solution according to the present invention as defined by the independent claims.

In a first aspect the invention relates to a keypad comprising
- a plate comprising one or more push buttons at given positions, said plate arranged for propagating in a surface of the plate a force or displacement applied to the plate by operating one of the push buttons,
- a plurality of sensing elements configured at given positions on a rigid surface and arranged for converting said force or displacement into corresponding electrical signals, said plurality of sensing elements being coupled with each other via the plate,
- analysing means adapted for receiving the electrical signals and for determining whether an error occurs in the keypad when operating the one or more push buttons, based on analysis of the received electrical signals thereby taking into account information on the positioning of said one or more push buttons and of the plurality of sensing elements on the rigid surface.

The claimed keypad indeed achieves the goal of allowing detection of an error in the keypad when one or more of the push buttons are being operated. The proposed solution thus paves the way for fault-tolerant detection. Due to the presence of a multiple sensing elements coupled with each other via the plate comprising the push buttons, ripple sensing can be applied, i.e. several sensing elements sense to some extent, depending on their distance to the pushed button, a force or displacement applied to one of the push buttons. Clearly, there is a relationship between the applied amount of force or displacement and the sensed signal level dependent on the distance from a certain position on the plate to the activated push button, this is called 'ripple'. The various ripple sensed signals allow for secondary detection, which can be exploited along with the primary detection (i.e. the sensed signal closest to the impacted push button, which yields the highest amplitude value). The primary and secondary detection allow detecting an error in the operation of the keypad and mitigating the effect of that possible error. They further allow determining which push button has been operated.

The proposed structure also advantageously lends itself for performing a self-test of the keypad. In a preferred embodiment the keypad comprises generator means arranged for generating test signals to be applied to at least one of the sensing elements. This feature allows implementation of the self-test functionality. By sending test signals with predefined characteristics and analysing the response signals from the sensing elements the correct functioning of the keypad can be tested. In one embodiment the generator means may be connected directly to the sensing means, whereas in another embodiment an indirect connection via the plate may be established.

In an advantageous embodiment the keypad comprises a controller adapted for controlling the generator means and for defining parameters for the test signal. The controller contains the 'intelligence' to determine the test scenarios.

In a preferred embodiment the analysing means comprises logic circuitry for performing the analysis of the received electrical signals.

Preferably the sensing elements are piezo-electric sensors or capacitive sense elements.

Advantageously, the test signal has a frequency in the audible frequency range. In another embodiment the generator means provides haptic feedback for the keypad.

In a preferred embodiment the keypad comprises a stack formed by one of the sensing elements and one of the generator means. Alternatively, the stack is formed by a plurality of sensing elements. In another embodiment the stack comprises more than one sensing element and more than one generator means. Typically the keypad comprises a plurality of such stacks.

Advantageously, there is a coupling provided between the sensing element and the generator means. In one embodiment the sensing element and the generator means are integrated.

In a specific embodiment the keypad comprises a spacer to separate the plate and the rigid surface.

In another aspect the invention relates to a method for testing a keypad comprising a plate comprising one or more push buttons at given positions, said plate arranged for propagating in a surface of the plate a force or displacement applied to said plate by operating one of said push buttons and a plurality of sensing elements configured at given positions on a rigid surface and arranged for converting said force or displacement into a plurality of electrical signals, said sensing elements being coupled with each other via said plate, the method comprising
- operating a push button of said keypad,
- receiving in response electrical signals from said plurality of sensing elements,
- determining whether an error occurs in said keypad based on analysis of said received electrical signals, thereby taking into account information on the positioning of said one or more push buttons and of said plurality of sensing elements on said rigid surface.

Preferably the method comprises a step of generating a test signal and applying the test signal to the plurality of sensing elements.

In another aspect the invention relates to a method for determining which push button has been operated on a keypad, said keypad comprising a plate comprising one or more push buttons at given positions, said plate arranged for propagating in a surface of the plate a force or displacement applied to the plate by operating one of the push buttons and a plurality of sensing elements configured at given positions on a rigid surface and arranged for converting the force or displacement into corresponding electrical signals, said sensing elements being coupled with each other via the plate. The method comprises
- receiving the electrical signals from the plurality of sensing elements,
- detecting a maximum signal level among the received signals, thereby obtaining a primary detection,
- performing a secondary detection based on at least a part of the received signals different from the received signal with said maximum signal level,
- determining which push button on the keypad has been operated based on the first and the second detection, thereby taking into account information on the positioning of the one or more push buttons on the keypad and of the plurality of sensing elements on the rigid surface.
The proposed solution allows operating the keypad in a correct way if one of the sensing elements is out of order, even if it concerns the operated button.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, wherein like reference numerals refer to like elements in the various figures.
Fig.1 illustrates a part of one embodiment of the keypad of the invention.
Fig.2 illustrates the effect of ripple sensing.
Fig.3 illustrates ripple sensing with piezo sensing elements.
Fig.4 illustrates a detection scheme for the analyser.
Fig.5 illustrates the logic circuitry in the analyser for performing the analysis of the various received signals.
Fig.6 illustrates an embodiment of the keypad with generator means and a controller.
Fig.7 illustrates some possibilities for a button stack.
Fig.8 represents an embodiment where a generator is provided with auditive, haptic and self-test means.
Fig.9 illustrates a push-button which implements travel for operating the button.
Fig.10 represents an embodiment of a keypad with capacitive sensing.
Fig.11 illustrates a waveform diagram from detection via specific test scheduling.
Fig.12 illustrates a redundant stack with piezo-electric elements.
Fig.13 illustrates two stacks with piezo-electric generator-sensor elements.
Fig.14 illustrates a diverse stack of piezo-electric and cap-sense elements.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

The proposed solution exploits the use of ripple sensing for detecting a plurality of signals caused by operating one of the push buttons. As will be described in detail below, this yields various advantageous effects. In one aspect the present invention discloses a keypad that allows for assessing the proper functioning of the keypad when one or more push buttons have been operated. In another aspect the present invention relates to a keypad that allows deciding in a fault-tolerant way which push button of the variety of push buttons provided in a plate at the surface of the keypad has been pushed.

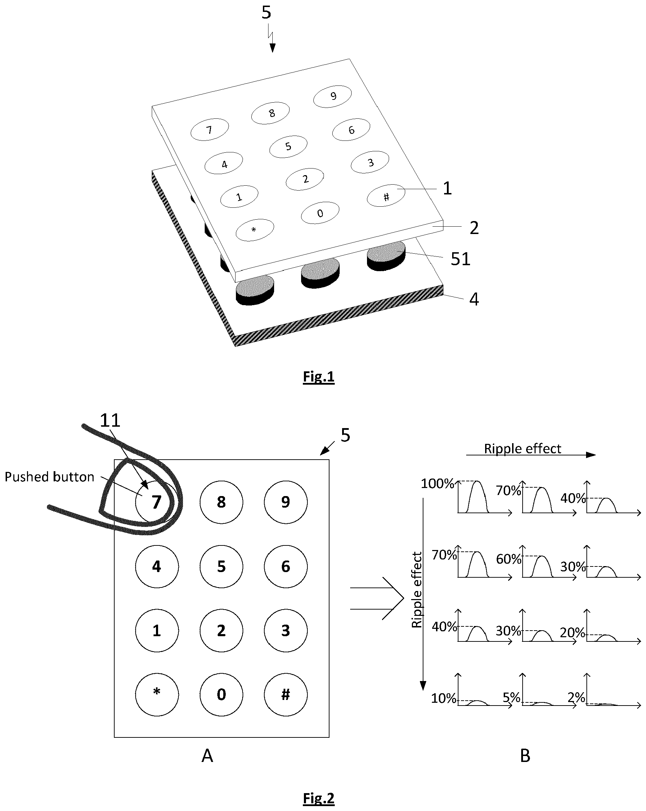

Fig.1 illustrates an embodiment of the keypad (5) according to the invention. The push buttons (1) are comprised in a plate (2) where they are located at known positions. The keypad comprises a number of sensing elements (51) positioned at known places on a rigid surface (4). One option can be that one sensing element is provided for each push button. The sensing element is then preferably located substantially below the corresponding push button. Alternatively, the sensing elements are so positioned that they are spread over the whole of the plate, without a one-on-one positioning between a push button and a sensing element. The sensing elements are coupled with each other via the plate comprising the push buttons.

When a push button is operated, a force or displacement is applied to that button. This force or displacement propagates in the surface of the plate comprising the plurality of push buttons. The sensors are coupled with each other via that plate. Several of the sensors therefore sense to a more or lesser extent the effect of the applied force or displacement. This is called the ripple effect. The sensors convert the sensed force or displacement into a plurality of electrical signals (e.g. one for each sensor). These signals are fed to an analyser block comprising processing means capable of determining whether the operated push button is functioning without failure and of deciding on which push button that has been operated. This involves an analysis of the amplitude of the various received signals and the known positions of the push buttons and the sensors.

Fig.1 illustrates a preferred embodiment of a keypad according to the invention. The mounting of multiple sensing elements in parallel is shown. The sensing elements are isolated electrically from each other, but mechanically coupled in a direct way via the plate. On one side the sensors are mounted on a stiff mass (4) while the other end is free to move and coupled to the plate comprising the multiple push buttons. In Fig.1 a set-up is shown wherein with each push button corresponds a sensing element. By applying a force to one of the push buttons on the plate, the switching element below senses the activation. This forms a primary detection. The other sensing elements not located directly under the activated button also sense in a reduced way the application of a force or displacement on the button (ripple sensing). The ripple sense of the coupled sensors is correlated with the distance between the different sensing elements and the pushed button (see Fig.2). In Fig.2A the button (11) in the left top corner is pushed. The sensed signals as a function of time for each sensing element are shown in Fig.2B. The signals are transient analog signals. The closest sensing element gets the maximum peak sensor signal level detection, which is here referred to as 100% signal level detection. This is the primary detection. The sensing elements farther away from the pushed button location detect a smaller signal level (detection ripples out away from the location of activation). This is indicated by a smaller pulse from the sensing element and a signal level percentage less than 100%. The combination of these lower level peak signals form the secondary detection. Obviously, the indicated value is merely an example of the possible detected amount of signal, this will depend on the implementation of the plate and its fixation to the rigid surface. Each location of a push on the plate has its unique fingerprint of the combined signal sensed by each sensing element. By analysing all the ripple senses (secondary detection) it can also be determined which button has been pushed. In the described example it is clear from the pattern obtained from the secondary detection that the upper left key was pressed, even in the absence of the signal from the upper left sensing element. This combination of the primary and the secondary detection provides a fault-tolerant detection of the activated button. This increases the availability and reliability of the buttons on the keypad.

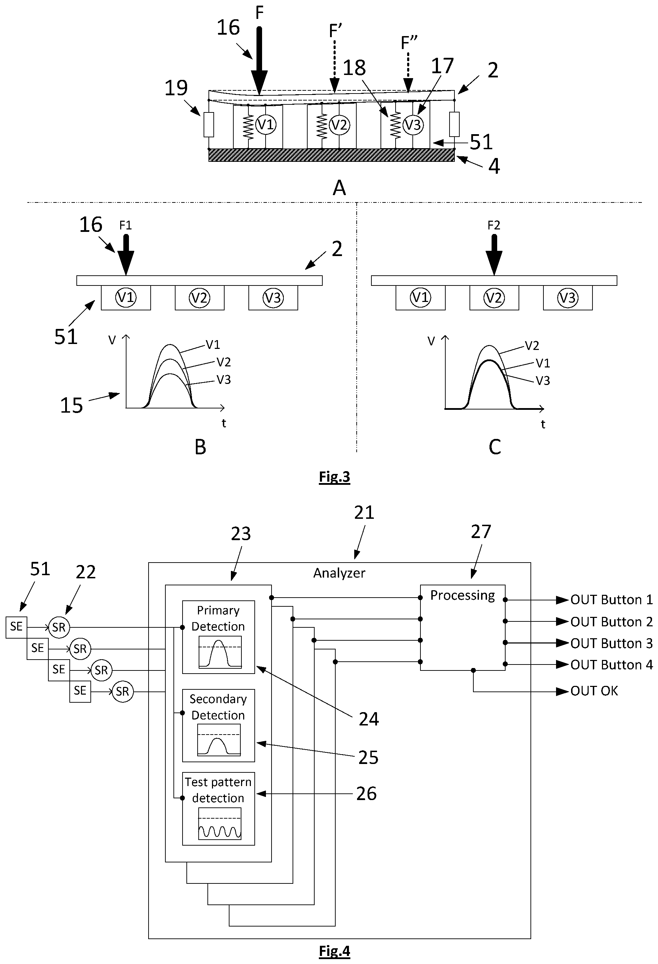

The operational principle is further detailed in Fig.3, where piezo-electric sensing elements are employed. The edge of the plate is connected via another structure to the rigid surface (4). This fixation is represented by a resistor (19), indicating a resistance against movement of the plate with respect to the rigid surface. The sensing element (51) can be modelled as a spring (18) to represent a resistance against deformation and a voltage source Vi (17) (*i*=1,2,3) dependent on the force applied to the piezo-element. A force F (16) is applied to the button on the keypad plate (2) which propagates along the plate and can be represented by F' above the closest neighbouring sensing element and F" above the next sensing element, where F is bigger than F' and F' bigger than F", according to a certain relationship defined by the distance between push-buttons, the resistance of the connection between plate and rigid surface, material properties of the plate and the spring of the piezo-element. This results in gradual signal generation in neighbouring keys, of which the signal level is function of the same relationship as mentioned before. Said relationship also allows computing F' and F" from force F. In the voltage-time plot (15) in Fig.3B the voltage signals are shown for the different voltage sources within the piezo-elements when the left button (F1) is pushed. The transient signal of V1 is bigger than that of V2, which is bigger than V3. The transient signal V2 and V3 can be computed by V2= f(V1, R₁₂, ...) and V3 = f(V1, R₁₃, ...), wherein R₁₂ represents the material characteristics and the distance between sensing element 1 to sensing element 2. R₁₃ represents the material characteristics and the distance between sensing element 1 to sensing element 3. In Fig.3C the middle button is pressed (F2). The resulting voltage-time plot shows a different pattern from the voltage sources. V2 signal is now bigger than V1 and V3, while V1 and V3 are equal. The transient signal V1 and V3 can be computed by V1 = f (V2, R₂₁, ...) and V3 = f(V2, R₂₃, ...), wherein R₂₁ is representative of the material characteristics and the distance between sensing element 2 to sensing element 1. R₂₃ accounts for the material characteristics and the distance between sensing element 2 to sensing element 3.

Fig.4 illustrates an embodiment of an analyzer (21) of the keypad, with a detection scheme for output control and fault mitigation purposes. The sensor readers SR perform translation/level shifting, if necessary, from the value from the sensing elements SE to the signal level expected by the analyzer. The various sensor readers each output an electrical signal, obtained from their attached sensing element, which is then inputted to the analyzer (21). The analyzer contains at the input several detector sets (23). Each set is adapted to perform a primary detection (24), a secondary detection (25) and optionally a test pattern detection (26) (which exploits information on this test pattern received from the controller, as described later). Each detector set takes in a signal from the corresponding sensor reader. The pieces of information from each detector set are combined in a processing block (27). Via the redundant information from primary (24) and secondary (25) detection, the button activation is determined and represented as a boolean OUT button x signal (with x = 1,2,3,4 in Fig.4). From a consistent validation of (24) and (25) or test pattern detection the failure analysis is performed and represented as a boolean OUT OK signal.

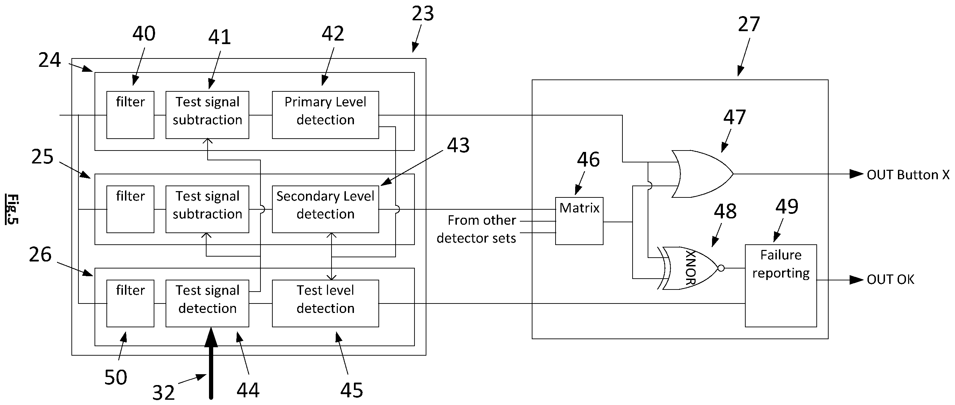

Fig.5 shows an embodiment of the logic circuitry which needs to be provided for analysing the signal received from each sensing element. The signal coming from the sensor reader is first filtered by a filter (40) to get rid of irrelevant information which might have been picked up. In case the option of a test signal is implemented, the test signal is subtracted (41) from the primary detection (24) and the secondary detection (25). In the primary detection the peak level of all sensed signals is detected (42). This gives a primary indication of which button has been activated. The level detected in the primary detection is communicated to the secondary level detection (43) and the test level detection (45) for setting a related threshold level for secondary detection and optionally test level detection. Within the secondary detector (25) the levels of the secondary signals are detected. These levels are sent to the matrix (46) which combines the levels of all secondary detectors. The activated button can also be determined by the filled matrix and the known location of the button. This redundant information is combined in block (47) to the OUT button signal indicating which button has been pushed. On the other hand, in case of a discrepancy between primary detection and secondary detection, performed via an XNOR (48), it can be indicated via OUT OK that there is a failing element within the keypad. The block Failure reporting (49) is used in case test pattern detection is employed.

Various technologies can be applied for implementing the sensing elements. Particularly well suited are piezo-electric elements or capacitive sense elements. However, also the use of e.g. piezo-resistive, electrostatic, MEMS, thermo-electric or pure mechanical, pneumatic, hydraulic elements can be envisaged.

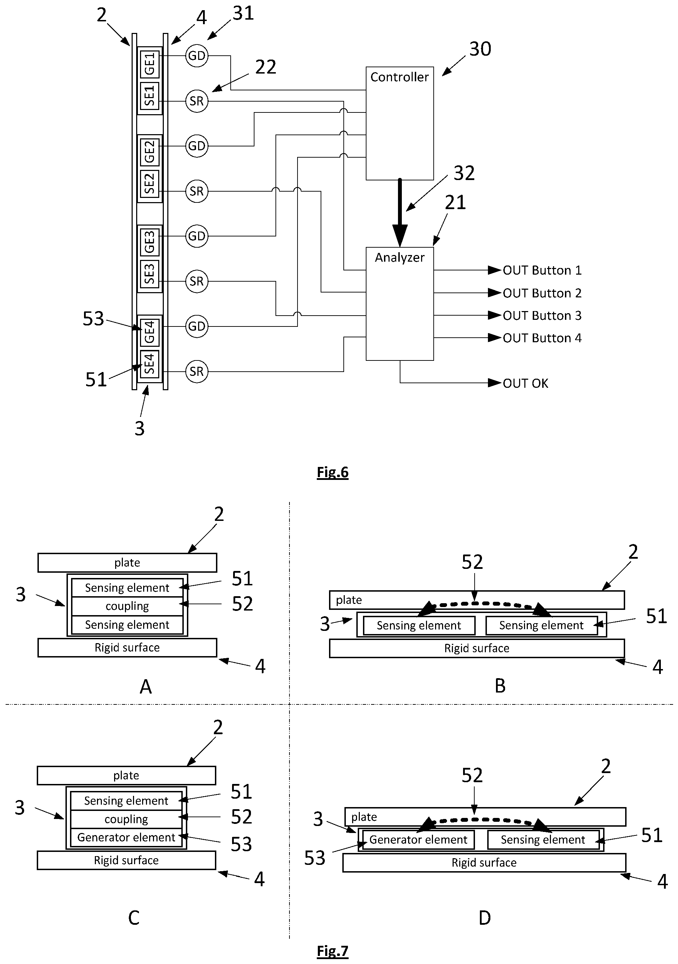

In order to provide this self-testing functionality the keypad further comprises in a preferred embodiment a generator capable of generating test signals to be applied to the sensors. An illustration is provided in Fig.6. The figure also shows a controller (30) that controls the generator comprising a generator drive (31) and a generator element (53). The generator drive GD performs translation/amplification, if necessary, of the test-signal from controller (30) to a signal which can activate the generator elements GE. In Fig.6 the generator element (53) is comprised in a button stack (3), which is a combination of a sensing element and the generator element. The button stack can be implemented in many possible ways, as described later. The controller provides the information about the test signal to the analyser via a communication link 32. This makes it possible for the analyser to determine a test signal, which is clearly distinguishable from an activation signal.

A varying signal, defined by the controller, is sent from the generator to the sensing element. The sensor will sense via the coupling an oscillating signal corresponding to the frequency and determined portion of the amplitude of the signal transmitted by the generator.

In order not to impair the normal push button operation the test signal is so designed that it is easily distinguishable from 'regular' signals occurring in normal operation, e.g. by a specific level, signal pattern, ... This test signal clearly different from a signal under normal operation enables continuous self-testing. One option is to use a certain predetermined signal amplitude imposed by the generator. When the push button is operated, this level is changed and activation is detected. As per example an oscillation with a certain nominal level is imposed by the generator and information on this event is communicated to the analyser. When the push button is operated, it damps the oscillation and the lower level at the analyser coming from the sensing element gives the trigger of activation. A second method for applying a test pattern is to make use of a key pattern defined by the generator, imposed to the test signal, where the key pattern differentiates from the activation pattern from the push button. The key pattern produced by the generator can for example be a sine wave while the activation pattern is an exponential pulse. Another possible approach involves a resonant structure implemented by the generator with a resonance frequency different from the operating frequency of the push button. When another frequency is seen than the resonance frequency, this means the push button is operated.

The generated signal is picked up by the sensing elements via the coupling means. These signals can be analysed and translated into an indication of the keypad's capability to detect movement of the button plate (2). By doing so, the push buttons can inherently be tested.

In accordance with the multitude of push buttons in a keypad, there can be a multitude of generators within a keypad as indicated in Fig.6. The controller (30) is capable of defining the scenario of generator activation and parameterization of the generator signal. From this a complex test pattern is applied to the plate (2) which is picked up by all sensing elements. Sensed signals are sent via the sensor reader (22) to the analyzer (21). At the same time the controller sends the test scenario data and signal parameters via link (32) to the analyzer. Via these means the analyzer detects if the received signals from the sensing elements are correct. The signal Boolean signal OUT OK is set to the value *true* as long no failure is revealed by analysis of the self-test signals from the keypad.

The applied test scenario isn't limited to a specific scenario. It can in its simplest form apply a scanning with switching on one generator at a time. Alternatively multiple generators can be switched on at the same time with the same or different parameters for the test signal to the different generators. It is important that the analyzer receive the correct test scenario so it can correlate it to the expected signals from all sensing elements. The expected signals depend on the same relation, distance and material properties, as with coupling from location of applied button to neighbouring sensing elements.

The test pattern detection (26) within Fig.4 receives the signal from the sensor reader (22). Fig.5 also shows a more detailed view on the test pattern detector. The signal coming from the sensor reader first passes through a filter (50) where non-valuable information is filtered away. Then the signal is processed by the test signal detection which compares the received signal parameters to the information received from the generator via the communication interface (32). The test signal level is determined and this is sent to the test level detector (45). This component analyses if the level is corresponding to the expected level according to the coupling losses and operation of the button (threshold setting received from the primary level detection). The failure reporting block (49) combines the information from the test level detector and the XNOR (48) or any other comparison device. The failure reporting block transmits signal (OUT OK) if the keypad is still functioning without failure. The test pattern can be applied for self-test, audible and haptic signal, as will be detailed below.

The analyser and generator functionality can actually be implemented in several possible ways. Various technologies can be applied for implementing the generator elements. Particularly well suited are piezo-electric elements or capacitive sense elements. However, also the use of e.g. piezo-resistive, electrostatic, MEMS, thermo-electric or pure mechanical, pneumatic, hydraulic elements can be envisaged. The implementation of the sensing element and the generator element is not necessarily of the same type. The sensing element, the generator element and the way of coupling should be matched so that the sensing element is capable of measuring the generated signal by the generator element.

Fig.7 shows various possibilities for the stack (3) and the positioning of the sensing element (51) and optionally the generator element (53). The stacks represented in Fig.7A and 7B contain only sensing elements in case the keypad relies only on the primary and secondary detection for fault-tolerant operation. The coupling of the sensing elements is already described earlier. The embodiments represented in Figs. 7C and 7D contain a generator element, which together with the sensor forms a stack. The coupling (52) between the generator element and the sensing element can be implemented in a direct (Fig.7C) or indirect (Fig.7D) way. By this means a signal is generated by the generator fully or partially be transferred to the sensing element which shall detect this signal.

The specific embodiments of Fig.7, wherein the generator element and sensing element are coupled, are now discussed more in detail.

Fig.7A and Fig.7B show a stack (3) of only sensing elements (51) where detection of correct operation of the keypad is possible via ripple sensing. The sensing element is at a first end attached to the rigid surface (4) on a defined position. At the second end the sensing element is coupled to the plate of the keypad whereon the push buttons are located.

In Fig.7C the button stack (3) comprises a generator element (53) and a sensing element (51) that are directly coupled. The generator element is at one end attached to the rigid surface (4) on defined position. At the other end is the generator element coupled, via a known and computable coupling (52), to the sensing element. The sensing element is at one end coupled to the generator element and at the other end coupled to the plate (3). A multitude of button stacks can be present within the keypad or button.

In Fig.7D the button stack (3) comprises a generator element (53) and a sensing element (51) coupled with each other via the keypad plate. The generator element is at a first end attached to the rigid surface (4) on defined position. At the second end is the generator element coupled to the plate. The sensing element is at a first end coupled to the same rigid surface and at the second end coupled to the plate (3). The coupling between the generator element and sensing element occurs over the plate. The plate is arranged for a computable coupling between generator and sensor. A multitude of button stacks can be present within the keypad.

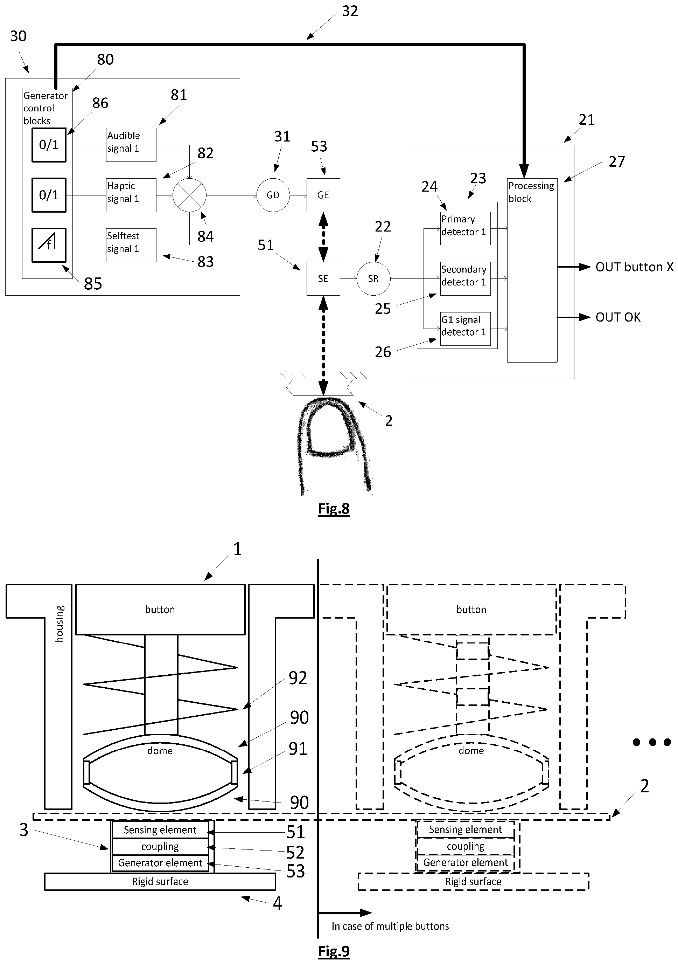

Fig.8 shows an embodiment wherein a piezoelectric sensing element 51 is used within the sensor for the push button. When the push button is pushed or hit, a resulting potential is built up at both sides of the sensing element. This transient voltage signal is amplified and brought to the detector. A second piezoelectric element is used as generator element 53 for the self-testing functionality of the push button. When a voltage is applied to generator element 53 it deforms/stretches. This excitation is coupled to the sensing element and further on to the plate 2. If the applied signal is generated in such a way that the vibration is generated in an audible frequency range (e.g. 10kHz) and for instance pulsed in a scenario, this causes an audible signal (e.g. SOS) defining the push buttons position to visually disabled people. Advantageously the plate is also oscillating with the applied signal. This introduces a tactile feedback to the user of the buttons on the keypad.

To drive the generator a signal is used having characteristics which clearly deviate from the characteristics of the push button activation signal, so that the generator signal is at all times distinguishable from the activation signal. In the embodiment shown in Fig.8 an oscillating self-test modulator (83) is used. The oscillation parameters (frequency and/or waveform and/or pattern) are defined by the parameter definition block for the self-test signal (85). This drive signal with a varying frequency makes that possible resonance frequencies imposed by the environment wherein the keypad is used, do not interfere with the push buttons self-testing. The controller sets also the signal for an audible signal. This can be a varying frequency with human audible characteristics set by the generator parameter block (86). This is fed to the oscillating audible modulator (81) and when applied to the plate, reacting as force transfer area to the air, this signal generates an audible sound. This signal allows the user to get an indication of the location of the keypad or audible feedback from the keypad.
The haptic signal modulator (82) generates a signal, which has e.g. human tactile characteristics (e.g. low frequent pulses). When applied to the keypad plate, reacting as force transfer area to the tactile sense, this signal generates a movement of this area which can be sensed by the user. This signal allows the user to position the push button or get tactile feedback from the keypad.
Triple redundancy is provided for detecting the keypad. The user can observe the push buttons are located on a certain visual location. The user can position the keypad by the audible signal and the user could feel if his hand is indeed in contact with the keypad by the sensing of the vibrating force transfer area.
The generator driver (31) is provided with an electrical signal from a mixing device (84) which combines the signals from three modulators into one electrical signal. The combined signal represents a complex signal relevant for the functionalities related to the individual modulators. The generator driver applies an electrical signal to the piezo structure which invokes a mechanical force in this structure.

When the push button is not operated, the signal received by the analyzer from the sensor reader 22 is coming only from the generating piezo-electric element 53 and contains the test oscillation signal (optionally including audible and haptic signals) with varying frequency and a specific amplitude. The analyser is adapted for analysing the received signal. The test signal received at the analyser from the sensing element can be determined by the distance from the generator element to the sensing element and material properties of the elements comprised by the keypad. When the received signal matches the determined value, a signal is outputted (OUT OK) to indicate the push button is operating as expected.

Because there can be multiple generators within the keypad and all can be coupled via the plate to the sensing elements, a sensing element can detect the oscillating signal originating from one of the different generators. Each generator has a predetermined relation, by its coupling means and distance, to each individual sensor. So each individual sensor can be tested by a multitude of generators providing in redundancy with respect to the testing of the piezo stack and the push button as such.

The application of the audible, haptic and test signals is organized by the generator control blocks (80). This component schedules different test scenarios to the generator element (53), organizes the audible signal waveform and defines the waveform of the haptic feedback signal. The status of the scenarios is also forwarded to the analyser (21) in order to allow the analyser to synchronise with the generator block.

Fig.9 illustrates another embodiment with the generator and sensing elements being a piezo-electric element. When this push button is not operated, the signal coming from the sensing element (51) is only related to the generator signal via the generator element (53) and its coupling (52) material. When the push button is operated, the amplitude of the signal generated by the sensing element is changed. This is due to the force applied on the button which damps the oscillation within the sensing element and reduces the amplitude. Additionally an energy pulse is created by the piezoelectric sensing element at the moment the stable position of the domes (90) is left and it flips to a metastable squeezed position.

In addition to a possible generated haptic feedback signal (counting on dome stiffness) the button of Fig.9 inherently provides some tactile feedback and is more resistant against inadvertent operation, because a higher force has to be applied to overcome the stable state and reach the metastable state as long as force is applied to the button. As some distance needs to be travelled by the button the risk of inadvertent activation will be lower. Optionally, a housing around the button can prevent operation of the button by placing some object against the button.

The same principle can be applied to multiple buttons (indicated in dashed lines) by adding the plate (2) in which the force or displacement will propagate to the neighbouring stack.

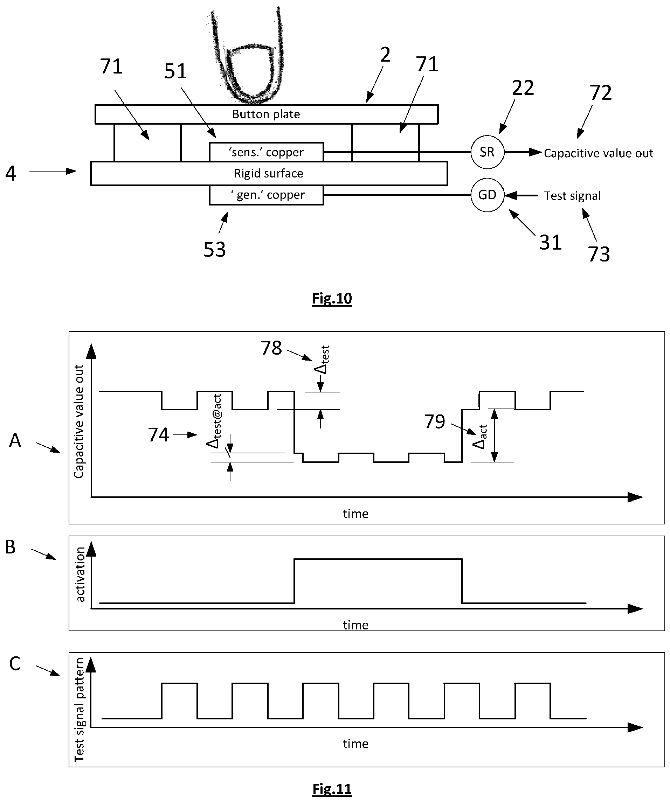

In the embodiment of Fig.10 a sensor copper pad (indicated by 'sens.' copper), which forms the sensing element (51), is placed on a rigid surface. With a spacer (71) (e.g. an isolator) a metal plate is placed at fixed distance from the rigid surface 4. Note that spacer (71) represents a practical implementation of resistor (19) shown in Fig.3. No spacer material is present above the copper pad, so that by pushing the metal plate (2) can be brought closer to the copper pad. On the other side of the isolating rigid surface aligned with the sense copper pad, a generator copper pad (indicated by 'gen.' copper) is placed. This generator copper pad forms the generator element (53). The generator copper pad is connected to the generator driver (31) that is adapted to influence the capacitance of the sense copper pad to a reference or a charge. The generator driver is driven with a test signal (73) with a specific test pattern defined by the controller.

The sensor copper pad is connected to a sensor reader (22) arranged for measuring the capacitance. The sensor reader outputs a signal (72) representative at the capacitance value of the sense copper pad.

Fig.11 shows plots related to the embodiment of Fig.10 with capacitive sensing. The cap sense methodology can differ, so abstraction is made of the actual signal and one only focusses on the pattern of the test signal and the sensed signal. The plot in Fig.11C indicates the test pattern which is sent to the generator driver (pattern of test signal 73). The plot in Fig.11B indicates the activation of the push button by the user. The plot in Fig.11A indicates the pattern of the capacitance value outputted by the cap sense sensor reader (this is pattern of the sensed signal 72). The change of capacitance of sense copper pad by the generator copper pad is observed in the capacitance value of the sense copper pad. The amount of change Δₜₑₛₜ (78) by the generator copper pad depends on the capacitor value and on the parasitic capacitance between the two pads. A specific, dedicated pattern is given to the generator. This pattern can be found back within the capacitance measurement (72) shown within the plot of Fig.11A, having a step Δₜₑₛₜ. As long as this test specific pattern and corresponding level change is discovered by the analyser, correct functioning of the push button is guaranteed.

When the metal plate is pushed (Fig.11B), the capacitance value (shown in Fig.11A) of the sense copper pad changes in another way than with the test pattern and with a different level (amount change during activation : Δ_{act} (79)). This level change triggers the operation of the push button at the analyzer. Activation of the button can be detected until the capacitance value again reaches its initial value. While the metal plate is pushed, the test pattern of Fig.11C can still be discovered in the sensed signal (72) pattern, as shown in the plot representing the capacitance measurement pattern (Fig.11A). The amount of change by the generator copper pad is changed as compared to when no push button is operated. The amount of change is now Δ_{test@act} (74), this can be used as redundant detection of operation of the push button and self-testing capabilities remain during the operation of the push button.

The generator element 53 which applies the self-test signal to the push button can be implemented using a wide variety of technologies. One option is a piezo-electric, electrostatic implementation as in the previous examples, but also embodiments using MEMS, thermal elements etc ... can be envisaged. Also for the sensing element 51 different technologies can be applied. The sensing element needs to be sensitive to both the activation of the push button and the excitation of the generator and transmit both signals. The sensing element can be implemented by piezo-electric, piezo-resistive, electrostatic, thermoelectric, electromagnetic, MEMS, pneumatic, hydraulic, mechanical... elements.

The arrangement according to the invention comprises a button linked with only a sensing element or a button stack of generator element and sensing element for push button with self-testing of the sensor and analyser within the push button. The invention also proposes a method for continuous self-testing without interrupting the push button operation.

While some previous examples elaborate on a single push button element, it should be emphasised that the ripple detection within a keypad, comprising a multitude of push buttons, is also to be considered and could be applied as such providing in fault-tolerant key stroke detection topologies.

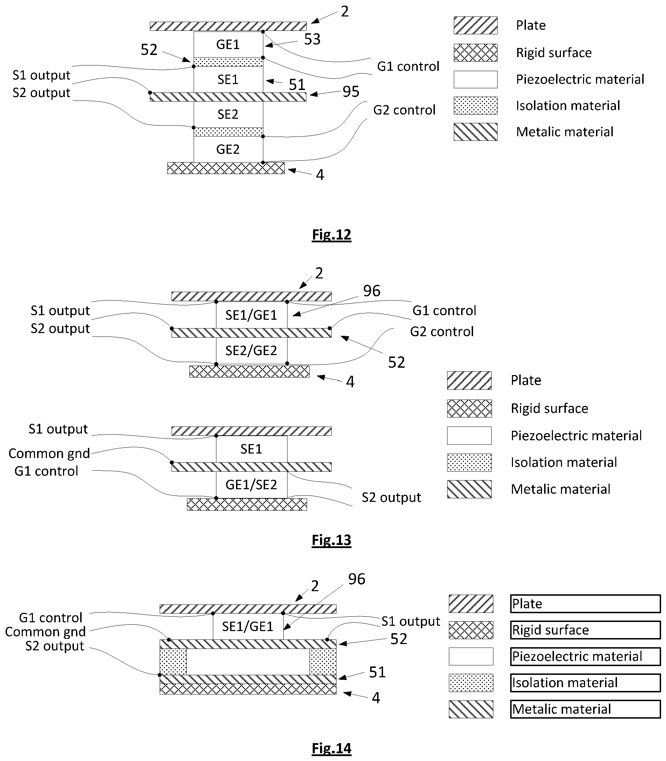

Fig.12 shows another embodiment of a stack, connecting two generator elements (53) and two sensing elements (51) of a piezoelectric material with full redundancy. It positions the two generators on the outside of the structure. The sensors are then placed in between the generators.

The sensing elements are separated from the generator elements by means of an isolation material. This material isolates the generator element from the sensing element while allowing the transmission of flexing. This flexing can either originate from the generator element or from applying pressure to the structure (i.e. pushing the button).

The sensing elements are then connected by means of thin metallic disc (95). This metallic disc provides an electrical connection to both sensing elements. With proper dimensioning of this disc it is also capable of producing audible vibrations when either one of the generator elements or both apply a fitting signal.

Fig. 13 shows an embodiment of the invention, wherein the generator element and the sensing element are combined within one physical element, named generator-sensor element (96).

The separation between generator and sensor signal is performed within the generator driver and sensor reader. There can be two generator-sensor elements or one generator element and one generator-sensor element. The stack is reference to a rigid surface. In between the two elements there is a thin metal disk.

Fig.14 shows an embodiment that doesn't use the same technology for the generator element and sensing element. Here the generator-sensor element (96) is again based on the piezoelectric principle. When applying a potential, it deflects its base metallic base plate (52), thus varying the capacitance observed by the capacitance sensing element (51).

When the plate (2) is pressed, it can be observed in two different ways. The piezoelectric element (96) will induce an energy peak and also the capacitance sensing element (51) observe a variance as described earlier with cap sense. This structure gives a redundant means of detection to the analyzer.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Keypad (5) comprising
- a plate (2) comprising a plurality of push buttons (1) at given positions, said plate arranged for propagating in a surface of the plate a force or displacement applied to said plate by operating one of said push buttons,
- a plurality of sensing elements (51) positioned at given positions on a rigid surface (4) and arranged for converting said force or displacement into corresponding electrical signals, said plurality of sensing elements being electrically isolated from each other and being mechanically coupled with each other via said plate, said sensing elements so spread that for each push button there is a sensing element closer to said push button than any other sensing element,
- connection means for connecting said plate with said rigid surface, said connection means providing resistance against movement of said plate with respect to said rigid surface,
- analysing means (21) comprising detection means (23) for performing on said electrical signals a primary detection corresponding to a sensed signal with highest amplitude sensed by the a most nearby sensing element when one of said push buttons is activated and for performing a secondary detection corresponding to sensed signals with lower amplitude sensed by sensing elements located farther away from said activated push button, whereby the distance between the given positions of said push buttons and the given positions of said sensing elements is exploited, said analysing means further arranged for determining which push button has been activated using redundant information from said primary and said secondary detection.

2. Keypad as in claim 1, wherein-the number of sensing elements equals the number of push buttons, so that one sensing element is provided for each push button, whereby the sensing element is located substantially below the corresponding push button.

3. Keypad as in claim 1, wherein said sensing elements are spread without one-to-one relationship with the push buttons.

4. Keypad as in any of claims 1 to 3, comprising generator means (53,31) arranged for generating a test signal to be applied to at least one of said sensing elements.

5. Keypad as in claim 4, comprising a controller (30) adapted for controlling said generator means and for defining parameters for said test signal.

6. Keypad as in any of the previous claims, wherein said sensing elements are piezo-electric sensors or capacitive sense elements.

7. Keypad as in any of claims 4 to 6, wherein one of said sensing elements and one of said generator means are combined to form a stack (3).

8. Keypad as in any of claim 4 to 6, whereby more than one sensing element and more than one generator means are combined to form a stack.

9. Keypad as in claim 7 or 8, whereby a coupling (52) is provided between said sensing element and said generator means.

10. Keypad as in any of claims 7 to 9, whereby said sensing element and said generator means are integrated.

11. Keypad as in any of the previous claims, comprising a spacer (71) to separate said plate (2) and said rigid surface (4).

12. Method for determining which push button has been operated on a keypad, said keypad (5) comprising a plate (2) comprising a plurality of push buttons at given positions, said plate arranged for propagating in a surface of the plate a force or displacement applied to said plate by operating one of said push buttons, a plurality of sensing elements (51) positioned at given positions on a rigid surface (4) and arranged for converting said force or displacement into corresponding electrical signals, said sensing elements being electrically isolated from each other and being mechanically coupled with each other via said plate and so spread that for each push button there is a sensing element closer to said push button than any other sensing element, and connection means for connecting said plate with said rigid surface, said connection means providing resistance against movement of said plate with respect to said rigid surface, the method comprising
- receiving said electrical signals from said plurality of sensing elements,
- performing on said electrical signals a primary detection corresponding to the a sensed signal with highest amplitude sensed by the a most nearby sensing element when one of said push buttons is activated,
- performing a secondary detection corresponding to sensed signals with lower amplitude sensed by sensing elements located farther away from said activated push button, whereby the distance between the given positions of said push buttons and the given positions of said sensing elements is exploited,
- determining which push button on said keypad has been operated using redundant information from said primary and said secondary detection.

13. Method for determining which push button has been operated on a keypad as in claim 12, comprising a step of generating a test signal for testing said keypad and applying said test signal to said plurality of sensing elements.

## Patentansprüche

1. Tastenfeld (5) umfassend
- eine Platte (2), die eine Vielzahl von Druckknöpfen (1) an gegebenen Positionen umfasst, wobei die Platte eingerichtet ist, um in einer Oberfläche der Platte eine Kraft oder Verlagerung auszubreiten, die an die Platte durch Betätigen eines der Druckknöpfe angelegt wird,
- eine Vielzahl von Erfassungselementen (51), die an gegebenen Positionen auf einer starren Oberfläche (4) positioniert und eingerichtet sind, um die Kraft oder Verlagerung in entsprechende elektrische Signale umzuwandeln, wobei die Vielzahl von Erfassungselementen elektrisch voneinander isoliert und mechanisch miteinander über die Platte gekoppelt ist, wobei die Erfassungselemente derart verteilt sind, dass es für jeden Druckknopf ein Erfassungselement gibt, das näher an dem Druckknopf als ein anderes Erfassungselement,
- ein Verbindungsmittel zum Verbinden der Platte mit der starren Oberfläche, wobei das Verbindungsmittel Widerstand gegen Bewegung der Platte in Bezug zu der starren Oberfläche bereitstellt,
- ein Analysemittel (21), das ein Erfassungsmittel (23) zum Ausführen auf den elektrischen Signalen einer Primärerfassung umfasst, die einem erfassen Signal mit der höchsten Amplitude entspricht, die von einem am nächsten liegenden Erfassungselement erfasst wird, wenn einer der Druckknöpfe aktiviert wird, und um eine Sekundärerfassung auszuführen, die den erfassten Signalen mit niedrigerer Amplitude entspricht, die durch Erfassungselemente, die von dem aktivierten Druckknopf weiter entfernt liegen, erfasst werden, wobei die Entfernung zwischen den gegebenen Positionen der Druckknöpfe an den gegebenen Positionen der Erfassungselemente genutzt wird, wobei das Analysemittel ferner eingerichtet ist, um zu bestimmen, welcher Druckknopf betätigt wurde, indem redundante Informationen von der Haupt- und Sekundärerfassung verwendet werden.

2. Tastenfeld nach Anspruch 1, wobei die Anzahl von Erfassungselementen gleich der Anzahl von Druckknöpfen ist, so dass ein Erfassungselement für jeden Druckknopf bereitgestellt ist, wobei das Erfassungselement im Wesentlichen unter dem entsprechenden Druckknopf liegt.

3. Tastenfeld nach Anspruch 1, wobei die Erfassungselemente ohne Eins-zu-Eins-Beziehung mit den Druckknöpfen verteilt sind.

4. Tastenfeld nach einem der Ansprüche 1 bis 3, Erzeugungsmittel (53, 31) umfasst, die eingerichtet sind, um ein Testsignal zu erzeugen, das an mindestens eines der Erfassungselemente anzulegen ist.

5. Tastenfeld nach Anspruch 4, das eine Steuervorrichtung (30) umfasst, die angepasst ist, um die Erzeugungsmittel zu steuern und um Parameter für das Testsignal zu definieren.

6. Tastenfeld nach einem der vorhergehenden Ansprüche, wobei die Erfassungselemente piezoelektrische Sensoren oder kapazitive Erfassungselemente sind.

7. Tastenfeld nach einem der Ansprüche 4 bis 6, wobei eines der Erfassungselemente und eines der Erzeugungsmittel kombiniert sind, um einen Stapel (3) zu bilden.

8. Tastenfeld nach einem der Ansprüche 4 bis 6, wobei mehr als ein Erfassungselement und mehr als ein Erzeugungsmittel kombiniert sind, um einen Stapel zu bilden.

9. Tastenfeld nach Anspruch 7 oder 8, wobei ein Koppeln (52) zwischen dem Erfassungselement und dem Erzeugungsmittel bereitgestellt ist.

10. Tastenfeld nach einem der Ansprüche 7 bis 9, wobei das Erfassungselement und das Erzeugungsmittel integriert sind.

11. Tastenfeld nach einem der vorhergehenden Ansprüche, das einen Abstandshalter (71) umfasst, um die Platte (2) und die starre Oberfläche (4) zu trennen.

12. Verfahren zum Bestimmen, welcher Druckknopf auf einem Tastenfeld betätigt wurde, wobei das Tastenfeld (5) eine Platte (2) umfasst, die eine Vielzahl von Druckknöpfen an gegebenen Positionen umfasst, wobei die Platte eingerichtet ist, um in einer Oberfläche der Platte eine Kraft oder Verlagerung zu verbreiten, die an die Platte durch Betätigen eines der Druckknöpfe angelegt wird, eine Vielzahl von Erfassungselementen (51), die an gegebenen Positionen auf einer starren Oberfläche (4) positioniert und eingerichtet ist, um die Kraft oder Verlagerung in entsprechende elektrische Signale umzuwandeln, wobei die Erfassungselemente elektrisch voneinander isoliert sind und mechanisch miteinander über die Platte gekoppelt und derart verteilt sind, dass es für jeden Druckknopf ein Erfassungselement gibt, das näher an dem Druckknopf ist als ein anderes Erfassungselement, und Verbindungsmittel zum Verbinden der Platte mit der starren Oberfläche, wobei die Verbindungsmittel Widerstand gegen Bewegung der Platte in Bezug zu der starren Oberfläche bereitstellen, wobei das Verfahren Folgendes umfasst:
- Empfangen der elektrischen Signale von der Vielzahl von Erfassungselementen,
- Ausführen auf den elektrischen Signalen einer Haupterfassung, die einem erfassen Signal mit höchster Amplitude entspricht, das durch ein am nächsten liegendes Erfassungselement, wenn einer der Druckknöpfe aktiviert wird, erfasst wird,
- Ausführen einer Sekundärerfassung, die erfassten Signalen mit niedrigerer Amplitude entspricht, die durch Erfassungselemente erfasst werden, die von dem aktivierten Druckknopf weiter entfernt sind, wobei die Entfernung zwischen den gegebenen Positionen der Druckknöpfe und den gegebenen Positionen der Erfassungselemente genutzt wird,
- Bestimmen, welcher Druckknopf des Tastenfeldes betätigt wurde, indem redundante Informationen aus der Primär- und Sekundärerfassung verwendet werden.

13. Verfahren zum Bestimmen, welcher Druckknopf auf einem Tastenfeld betätigt wurde, wie in Anspruch 12, das einen Schritt des Erzeugens eines Testsignals zum Testen des Tastenfeld und Anlegen des Testsignals an die Vielzahl von Erfassungselementen umfasst.

## Revendications

1. Clavier (5) comprenant :
- une plaque (2) comprenant une pluralité de boutons-poussoirs (1) à des positions données, ladite plaque étant agencée pour propager, dans une surface de la plaque, une force ou un déplacement appliqué à ladite plaque par l'actionnement de l'un desdits boutons-poussoirs,
- une pluralité d'éléments de détection (51) positionnés à des positions données sur une surface rigide (4) et agencés pour convertir ladite force ou ledit déplacement en signaux électriques correspondants, ladite pluralité d'éléments de détection étant électriquement isolés l'un de l'autre et étant mécaniquement couplés l'un à l'autre par l'intermédiaire de ladite plaque, lesdits éléments de détection étant répartis de telle sorte que, pour chaque bouton-poussoir, il y ait un élément de détection plus proche dudit bouton-poussoir que de n'importe quel autre élément de détection,
- des moyens de raccordement pour raccorder ladite plaque à ladite surface rigide, lesdits moyens de raccordement fournissant une résistance contre un mouvement de ladite plaque par rapport à ladite surface rigide,
- des moyens d'analyse (21) comprenant des moyens de détection (23) pour effectuer, sur lesdits signaux électriques, une détection primaire correspondant à un signal détecté avec la plus grande amplitude détectée par un élément de détection le plus proche lorsque l'un desdits boutons-poussoirs est activé et pour effectuer une détection secondaire correspondant à des signaux détectés avec une amplitude inférieure détectée par des éléments de détection situés plus loin dudit bouton-poussoir activé, de telle manière que la distance entre les positions données desdits boutons-poussoirs et les positions données desdits éléments de détection soit exploitée, lesdits moyens d'analyse étant en outre agencés pour déterminer quel bouton-poussoir est activé en utilisant des informations redondantes provenant de ladite détection primaire et de ladite détection secondaire.

2. Clavier selon la revendication 1, dans lequel le nombre d'éléments de détection est égal au nombre de boutons-poussoirs, de sorte qu'un élément de détection soit prévu pour chaque bouton-poussoir, de telle manière que l'élément de détection soit situé sensiblement au-dessous du bouton-poussoir correspondant.

3. Clavier selon la revendication 1, dans lequel lesdits éléments de détection sont répartis sans être en relation d'un à un avec les boutons-poussoirs.

4. Clavier selon l'une quelconque des revendications 1 à 3, comprenant des moyens générateurs (53, 31) agencés pour générer un signal de test à appliquer à au moins l'un desdits éléments de détection.

5. Clavier selon la revendication 4, comprenant un organe de commande (30) apte à commander lesdits moyens générateurs et à définir des paramètres pour ledit signal de test.

6. Clavier selon l'une quelconque des revendications précédentes, dans lequel lesdits éléments de détection sont des capteurs piézo-électriques ou des éléments détecteurs capacitifs.

7. Clavier selon l'une quelconque des revendications 4 à 6, dans lequel l'un desdits éléments de détection et l'un desdits moyens générateurs sont combinés pour former un empilement (3).

8. Clavier selon l'une quelconque des revendications 4 à 6, dans lequel plusieurs éléments de détection et plusieurs moyens générateurs sont combinés pour former un empilement.

9. Clavier selon la revendication 7 ou 8, dans lequel un accouplement (52) est prévu entre ledit élément de détection et lesdits moyens générateurs.

10. Clavier selon l'une quelconque des revendications 7 à 9, dans lequel ledit élément de détection et lesdits moyens générateurs sont intégrés.

11. Clavier selon l'une quelconque des revendications précédentes, comprenant une entretoise (71) pour séparer ladite plaque (2) et ladite surface rigide (4).

12. Procédé permettant de déterminer quel bouton-poussoir est actionné sur un clavier, ledit clavier (5) comprenant une plaque (2) comprenant une pluralité de boutons-poussoirs à des positions données, ladite plaque étant agencée pour propager, dans une surface de la plaque, une force ou un déplacement appliqué à ladite plaque par l'actionnement de l'un desdits boutons-poussoirs ; une pluralité d'éléments de détection (51) positionnés à des positions données sur une surface rigide (4) et agencés pour convertir ladite force ou ledit déplacement en signaux électriques correspondants, lesdits éléments de détection étant électriquement isolés l'un de l'autre et étant mécaniquement couplés l'un à l'autre par l'intermédiaire de ladite plaque et répartis de telle sorte que, pour chaque bouton-poussoir, il y ait un élément de détection plus proche dudit bouton-poussoir que de n'importe quel autre élément de détection ; et des moyens de raccordement pour raccorder ladite plaque à ladite surface rigide, lesdits moyens de raccordement fournissant une résistance contre un mouvement de ladite plaque par rapport à ladite surface rigide, le procédé comprenant :
- la réception desdits signaux électriques en provenance de ladite pluralité d'éléments de détection ;
- l'exécution, sur lesdits signaux électriques, d'une détection primaire correspondant à un signal détecté avec la plus grande amplitude détectée par un élément de détection le plus proche lorsque l'un desdits boutons-poussoirs est activé ;
- l'exécution d'une détection secondaire correspondant à des signaux détectés avec une amplitude inférieure détectée par des éléments de détection situés plus loin dudit bouton-poussoir activé, de telle manière que la distance entre les positions données desdits boutons-poussoirs et les positions données desdits éléments de détection soit exploitée ;
- la détermination de quel bouton-poussoir sur ledit clavier est actionné en utilisant des informations redondantes provenant de ladite détection primaire et de ladite détection secondaire.

13. Procédé permettant de déterminer quel bouton-poussoir a été actionné sur un clavier selon la revendication 12, comprenant une étape de génération d'un signal de test pour tester ledit clavier et d'application dudit signal de test à ladite pluralité d'éléments de détection.
